Europäisches Patentamt

European Patent Office

Office européen des brevets

(11) Veröffentlichungsnummer: **0 016 396**
**B1**

(12) **EUROPÄISCHE PATENTSCHRIFT**

(45) Veröffentlichungstag der Patentschrift: **29.06.83**

(21) Anmeldenummer: **80101219.6**

(22) Anmeldetag: **10.03.80**

(51) Int. Cl.³: **H 04 Q 3/68**, H 04 Q 3/47,
H 04 Q 11/04

(54) Koppelfeld mit Verbindungswegeumkehr, insbesondere für Fernsprechvermittlungsanlagen.

(30) Priorität: **15.03.79 DE 2910284**

(43) Veröffentlichungstag der Anmeldung:
**01.10.80 Patentblatt 80/20**

(45) Bekanntmachung des Hinweises auf die Patenterteilung:
**29.06.83 Patentblatt 83/26**

(84) Benannte Vertragsstaaten:
**AT CH FR GB IT NL SE**

(56) Entgegenhaltungen:
**DE - A - 2 454 144**
**US - A - 3 974 343**

**INTERNATIONAL CONFERENCE ON COM-**
**MUNICATIONS, 12.—15. Juni 1977, Seiten**
**20.4—66 20.4—70, Chicago New York, U.S.A.**
**T. YAMAGUCHI et al.: "System Design of Ex-**
**perimental Digital Telephone Switching**
**System"**

(73) Patentinhaber: **SIEMENS AKTIENGESELLSCHAFT**
**Berlin und München Wittelsbacherplatz 2**
**D-8000 München 2 (DE)**

(72) Erfinder: **Sorgenfrei, Heiko, Dipl.-Ing.**
**Ludwig-Thoma-Strasse 13**
**D-8029 Sauerlach (DE)**

Courier Press, Leamington Spa, England.

## Koppelfeld mit Verbindungswegeumkehr, insbesondere für Fernsprechvermittlungsanlagen

Bie Koppelfeldern mit Verbindungswegeumkehr liegen alle Teilnehmeranschlüsse an derselben Seite des Koppelfeldes. Jeder Teilnehmeranschluß kann über dieses Koppelfeld mit jedem beliebigen anderen Teilnehmeranschluß verbunden werden. Derartige Gruppierungen mit gleichartiger Anschlußlage für alle Teilnehmeranschlüsse werden Umkehrgruppierungen genannt (siehe NTZ, 1969, Heft 10, Seiten 588 bis 596). Ein derartiges Koppelfeld ist in der Regel in mehrere Koppelstufen gegliedert, welche Koppelvielfache enthalten, die über Zwischenleitungen von Koppelstufe zu Koppelstufe verbunden sind. Demgemäß sind die Teilnehmeranschlüsse an Eingänge von Eingangsteilkoppelfeldern angeschlossen, die über weitere Teilkoppelfelder verbindbar sind.

Die Erfindung geht nun von der Aufgabe aus, ein derartiges Koppelfeld mit Verbindungswegeumkehr derart auszugestalten, daß die verschiedenen dazu gehörigen Teilkoppelfelder in möglichst einheitlicher Weise steuerbar sind und insbesondere auch individuell steuerbar sind. Dabei ist z.B. zu vermeiden, daß bei bestimmten Teilkoppelfeldern manchmal Eingänge und Ausgänge für die Herstellung von Verbindungswegen zu verbinden sind und manchmal lediglich zwei Eingänge hierzu zu verbinden sind. Bekanntlich ist as bei solchen Koppelfeldern vorgesehen, bestimmte Verbindungswege nicht erst an der der Eingangsseite abgewandten Seite umkehren zu lassen, sondern als sogenannte Kurzwege bereits vorher umkehren zu lassen, beispielsweise bereits bei einem Eingangsteilkoppelfeld. Für einen derartigen Kurzweg sind daher bei einem Eingangsteilkoppelfeld zwei Eingänge miteinander zu verbinden, während sonst dort ein Eingang und ein Ausgang zu verbinden sind (siehe DE—C—12 62 358).

Bei der Erfindung wird demgemäß von einem Koppelfeld mit Umkehrgruppierung und dadurch gegebener Verbindungsdurchschaltung mit Verbindungswegeumkehr ausgegangen, bei dem die Teilnehmeranschlüsse an Eingänge von Eingangsteilkoppelfeldern angeschlossen sind und bei dem weitere Teilkoppelfelder vorgesehen sind. Dabei handelt es sich um ein Koppelfeld, wie es insbesondere für Fernsprechvermittlungsanlagen vorgesehen wird.

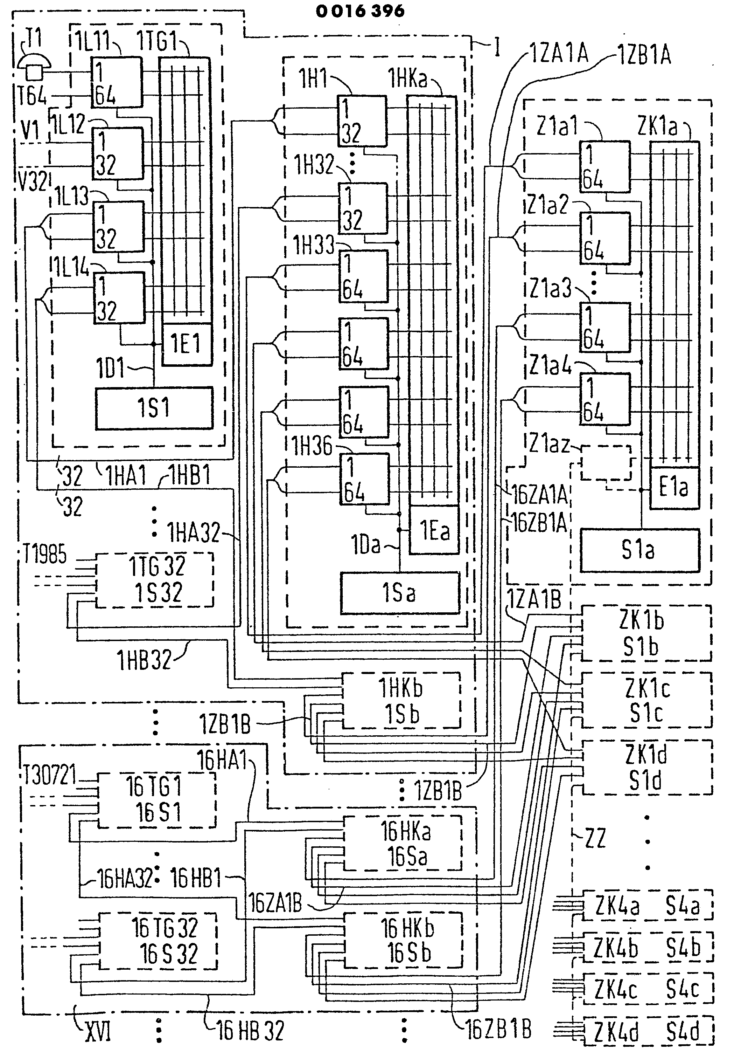

Ein aus mehreren Teilkoppelfeldern bestehendes derartiges Koppelnetz zeigt die Nachrichtentechnische Zeitschrift in Heft 10 (1969) auf Seite 591 in Bild 2. Darin sind die innerhalb des Koppelnetzes von Teilkoppelfeld zu Teilkoppelfeld verlaufenden koppelnetzinternen Zwischenleitungen jeweils von einem Teilkoppelfeldausgang eines Koppelfeldteiles zu einem Teilkoppelfeldausgang eines anderen Teilkoppelfeldes geführt. In solchen Koppelfeldern gibt es Kurzwegeverbindungen immer nur unter der Bedingung, daß die betreffenden beiden Koppelfeldeingänge, die miteinander zu verbinden sind, an ein und demselben Teilkoppelfeld liegen. Das bedeutet, daß der vorteilhafte bekannte Kurzwege-Effekt (siehe NTZ 1969, Seite 590, Absatz 3 in Abschnitt 3.2) in allen denjenigen Fällen verlorengeht, wo es sich um Verbindungen zwischen jeweils Koppelfeldeingängen handelt, die an verschiedenen Teilkoppelfeldern ein und desselben Koppelnetzes liegen. Zum einen bedeutet dies im bekannten Fälle, daß der Kurzwegeeffekt in umso höherem Maße verlorengeht, desto umfangreicher ein Koppelnetz aufgebaut ist, desto größer also die Anzahl der jeweils zu einem Koppelnetz zusammengefügten Teilkoppelfelder ist. Deshalb wurden auch teils recht komplizierte und softwarenmäßig aufwendige Wegesuchverfahren entwickelt (vgl. die deutschen Patentschriften 2 333 297 und 2639411 und die DE—B—2610862), um diesem ungünstigen Effekt zu begegnen. Zum anderen gibt es bei bekannten Koppelfeldern mit Umkehrgruppierung immer zwei Kategorien von Verbindungen, und zwar solche mit Kurzwegeverbindungsmöglichkeit (nämlich bei Verbindung zwischen zwei an ein und demselben Teilkoppelfeld liegenden Koppelfeldeingängen) und solche ohne Kurzwegeverbindungsmöglichkeit (nämlich bei Verbindung zwischen zwei an zwei verschiedenen Teilkoppelfeldern eines Koppelnetzes liegenden Koppelfeldeingängen). Deshalb muß auch die Wegesuche im bekannten Falle immer diese beiden Kategorien berücksichtigen und zunächst die bei jeder Verbindung gegebenen diesbezüglichen Voraussetzungen prüfen, erfassen und berücksichtigen.

Ein Koppelfeld mit Umkehrgruppierung und mit mit Teilnehmeranschlüssen beschalteten Eingangsteilkoppelfeldern und mit weiteren Teilkoppelfeldern ist darüberhinaus auch in der deutschen Patentschrift 2443941 dargestellt und beschrieben.

Für die Erfindung besteht die Aufgabe, sowohl die aus der Aufteilung durchzuschaltender Verbindungen in zwei Kategorien sich für die Wegesuche ergebenden erschwerenden Bedingungen zu beseitigen, als auch noch günstigere Voraussetzungen für eine Durchschaltung von Verbindungen in möglichst vielen Fällen über Kurzwege zu schaffen. Dadurch soll also erreicht werden, daß für alle Verbindungswege, ob sie nun lediglich über ein Eingangsteilkoppelfeld oder ob sie auch über weitere Teilkoppelfelder führen, eine Durchschaltung in den betroffenen Teilkoppelfeldern sowohl in einheitlicher Weise als auch über möglichst kurze Durchschaltewege vorgenommen wird.

Die Erfindung löst die Aufgabe dadurch, daß die die Teilkoppelfelder einschließlich Eingangsteilkoppelfelder verbindenden Zwischenleitungen bei jedem Teilkoppelfeld an zugehörige Eingänge gemäß Umkehrgruppierung bezüglich des betreffenden Teilkoppelfeldes selber angeschlossen sind und die Verbindungswege daher auch innerhalb der Teilkoppelfelder umkehren.

Während in den bekannten Fällen die die Teilkoppelfelder miteinander verbindenden Zwischenleitungen jeweils von Teilkoppelfeldausgang zu Teilkoppelfeldausgang geführt sind, verlaufen solche die verschiedenen Teilkoppelfelder miteinander verbindenden Zwischenleitungen erfindungsgemäß jeweils von Teilkoppelfeldeingang zu Teilkoppelfeldeingang. Hieraus ergibt sich, daß die Verbindungen auch innerhalb der Teilkoppelfelder umkehren. Durch die Erfindung wird sowohl die Wegesuche vereinfacht, was eine vorteilhafte schaltungstechnische bzw, softwaremäßige Entlastung der betreffenden Wegesucheinrichtungen zur Folge hat, als auch der Kurzwege-Effekt gesteigert, weil nunmehr für sämtliche Verbindungen Kurzwegemöglichkeiten bestehen. In jedem Fall werden hier zwei Eingänge der betroffenen Teilkoppelfelder einschließlich Eingangsteilkoppelfelder durch eine Durchschaltung verbunden. Die Steuerung für die Herstellung von Verbindungswegen ist daher auch für alle Verbindungswege einheitlich. Dadurch ergibt sich eine Vereinfachung der zu benutzenden Steuerwerke. Vorteilhafterweise können dann auch insbesondere weitgehend einheitlich aufgebaute Steuerwerke für alle verschiedenen Teilkoppelfelder benutzt werden. Es wird sich noch zeigen, daß bei weiterer Ausgestaltung einer Vermittlungsanlage mit einem gemäß der Erfindung aufgebauten Koppelfeld mehrere weitere Vorteile erzielbar sind.

Ausführungsbeispiele für das erfindungsgemäße Koppelfeld werden im folgenden anhand einer Vermittlungsanlage mit einem derartigen Koppelfeld näher erläutert, die in der Figur gezeigt ist. Die Einzelheiten der Anlage sind hier nur so weit gezeigt, wie es für die Erfindung von Bedeutung ist, die sich in erster Linie auf den Aufbau des Koppelfeldes in Teilkoppelfelder und darüber hinaus auch auf die Herstellung von Verbindungswegen zwischen Eingängen von Eingangsteilkoppelfeldern auswirkt.

In der Figur sind zunächst die Eingangsteilkoppelfelder 1TG1 ... 1TG32 gezeigt. Bei dem Eingangsteilkoppelfeld 1TG1 sind die Teilnehmeranschlüsse T1 ... T64 vorgesehen, deren zugehörende 64 Teilnehmerschaltungen zur Mehrfachanschlußschaltung 1L11 zusammengefaßt sind. Außerdem sind dort noch die 32 Verbindungsleitungen V1 ... V32 vorgesehen, über welche der Externverkehr zu anderen Ämtern geleitet wird. Die zugehörigen Anschlußschaltungen sind zur Mehrfachanschlußschaltung 1L12 zusammengefaßt. Bei den übrigen Eingangsteilkoppelfeldern, wozu das Eingangsteilkoppelfeld 1TG32 gehört, sind ebenfalls solche Teilnehmeranschlüsse und Verbindungsleitungen vorgesehen. Zu diesen Teilnehmeranschlüssen gehört der Teilnehmeranschluß T1985. Die Verbindungswege können hier noch über die beiden Hilfsteilkoppelfelder 1HKa und 1HKb geführt werden, über welche die Eingangsteilkoppelfelder 1TG1 ... 1TG32 zusammenschaltbar sind. Die Verbindungswege zwischen dem Eingangsteilkoppelfeld 1TG1 und dem Hilfsteilkoppelfeld 1HKa sind über die 32 Zwischenleitungen 1HA1 geführt. Beim Eingangsteilkoppelfeld 1TG1 sind sie über die Mehrfachanschlußschaltung 1L13 und beim Hilfsteilkoppelfeld 1HKa über die Mehrfachanschlußschaltung 1H32 angeschlossen. Die Verbindungswege zwischen dem Eingangsteilkoppelfeld 1TG1 und dem Hilfsteilkoppelfeld 1HKb führen über die 32 Zwischenleitungen 1HB1. Diese sind beim Eingangsteilkoppelfeld 1TG1 über die Mehrfachanschlußschaltung 1L14 angeschlossen. Die Hilfsteilkoppelfelder 1HKa und 1HKb sind in entsprechener Weise mit den übrigen Eingangsteilkoppelfeldern über Zwischenleitungen verbunden. So sind sie mit Eingangsteilkoppelfeld 1TG32 über die Zwischenleitungen 1HA32 und 1HB32 verbunden. Die vorstehend beschriebenen Teilkoppelfelder 1TG1 ... 1TG32 sowie 1HKa und 1HKb gehören zusammen zur Teilkoppelfeldgruppe I.

Das in der Figur gezeigte Koppelfeld hat nun nicht nur die Teilkoppelfeldgruppe I sondern auch weitere solche Teilkoppelfeldgruppen, von denen die letzte die Teilkoppelfeldgruppe XVI ist. Zur Teilkoppelfeldgruppe XVI gehören die Eingangsteilkoppelfelder 16TG1 ... 16TG32 sowie die Hilfsteilkoppelfelder 16HKa und 16HKb. Die zur Teilkoppelfeldgruppe XVI gehörenden Teilkoppelfelder sind über die Zwischenleitungen 16HA1 ... 16HA32 sowie 16HB1 ... 16HB32 verbunden. Die Teilfeldgruppen I ... XVI sind ihrerseits über die Zusatsteilkoppelfelder ZK1a, ZK1b, ZK1c und ZK1d verbunden, und zwar entsprechend wie die Eingangsteilkoppelfelder jeweils über Hilfsteilkoppelfelder verbunden sind, nämlich jeweils über Zwischenleitungen.

Dazu gehören die Zwischenleitungen 1ZA1A, 1ZB1A, 16ZA1A, 16ZB1A sowie 1ZA1B, 1ZB1B und 16ZB1B. So ist z.B. das Hilfsteilkoppelfeld 1HKa über die 64 Zwischenleitungen 1ZA1A mit dem Zusatzteilkoppelfeld ZK1a verbunden. Diese Zwischen leitungen sind über die Mehrfachanschlußschaltungen 1H1 und Z1a1 geführt. Bei dem Zusatzteilkoppelfeld ZK1a sind noch die weiteren Mehrfachanschlußschaltungen Z1a2, Z1a3, Z1a4 vorhanden, zu denen die bereits erwähnten Zwischenleitungen 1ZB1A, 16ZA1A und 16ZB1A führen. In entsprechender Weise sind bei den Zusatzteilkoppelfeldern ZK1b, ZK1c und ZK1d unter anderem die Zwischenleitungen 1ZA1b, 1ZB1b und 16ZB1B angeschlossen. Bei Verbindungsanforderungen, bei denen das Ursprungseingangsteilkoppelfeld und das Zieleingangsteilkoppelfeld zu verschiedenen Teilkoppelfeldgruppen gehören, wird dann der

Verbindungsweg jeweils über eines der Zusatzteilkoppelfelder ZK1a ... ZK1d geführt.

Wie bereits angegeben, sind die Teilnehmeranschlüsse T1 ... T64 ... T1985 ... bei dem in der Figur gezeigten Ausführungsbeispiel an das Koppelfeld gemäß Umkehrgruppierung angeschlossen. Die Verbindungswege kehren daher innerhalb oder am Rande des Koppelfeldes um, wobei sie von einem Teilnehmeranschluß ausgehen und zu einem anderen Teilnehmeranschluß zurückführen. Es sind nun hier auch noch die die Teilkoppelfelder verbindenden Zwischenleitungen bei jedem Teilkoppelfeld nur an zugehörige Eingänge gemäß Umkehrgruppierung bezüglich des Teilkoppelfeldes selber angeschlossen. Die Verbindungswege kehren daher auch innerhalb der Teilkoppelfelder um, über die sie geführt sind. Eine derartige Umkehr ist z.B. auch bei Verbindungswegen vorhanden, durch welche die Teilnehmeranschlüsse T1 und T64 oder beispielsweise die Teilnehmeranschlüsse T1 und T1985 verbunden werden. Durch diese Gruppierungsmaßnahme ergibt es sich, daß bei der Herstellung von Verbindungswegen bei jedem betroffenen Teilkoppelfeld jeweils eine Durchschaltung zwischen zwei Eingängen vorzunehmen ist. In diesem Zusammenhang hat die Arbeitsweise aller Steuerwerke übereinzustimmen. Dies ist sehr vorteilhaft für einen baukastenartigen Aufbau der Vermittlungsanlage.

Zweckmäßigerweise werden auch die Verbindungssätze und weitere pro Verbindung erforderliche Schaltglieder in gleicher Weise wie die Teilnehmeranschlüsse an die Eingänge von Eingangsteilkoppelfeldern angeschlossen (siehe DE—C—12 35 379). Die Verbindungssätze und die erwähnten Schaltglieder können daher ebenfalls in einheitlicher Steuerungstechnik en Verbindungswege angeschlossen werden.

Entsprechende Vorteile gelten auch für die Auftrennung von Verbindungswegen. So kann ein Verbindungsweg z.B. jewells mit Hilfe eines Steuersignals aufgetrennt werden, das bei den am Verbindungsweg beteiligten Teilkoppelfeldern empfangen und dort zur Auftrennung im zugehörigen Teilkoppelfeld ausgenutzt wird.

Die Teilkoppelfelder können jeweils derart bemessen werden, daß sie meistens in der Lage sind, die angeforderten Durchschaltungen für Verbindungswege auszuführen. Dies ist stets der Fall, wenn sie als vollkommene Bündel gruppiert sind. Wenn es sich um eine Vermittlungsanlage mit digitaler Nachrichtenübertragung handelt (siehe 1978 International Zurich Seminar on Digital Communications, Proceedings IEEE, Catalogue Nr. 78 CH 11320—0 ASST, Seiten B2.1 bis B2.5), so können die Teilkoppelfelder auch als elektronische Raumvielfachkoppler ausgebildet sein. Sie können auch jeweils durch einen Zeitkanalkoppler gebildet werden. Dann können auch die Zwischenleitungen, welche die verschiedenen Teilkoppelfelder verbinden, zeitmultiplexweise ausgenutzt werden. Es sind dann zwischen zwei Teilkoppelfeldern sicher jeweils mehrere Verbindungswege durchschaltbar. Die Zahl der über das Koppelfeld führenden Verbindungswege kann so reichlich bemessen werden, daß kaum mit gessenbesetzt zu rechnen ist.

Der Externverkehr kann über die Verbindungsleitungen geführt werden, die an Eingänge von Eingangsteilkoppelfeldern angeschlossen sind, wie die Verbindungsleitungen V1 ... V32, die beim Eingangsteilkoppelfeld 1TG1 über den Mehrfachanschluß 1L12 angeschlossen sind. Zweckmäßigerweise wird bei jedem Eingangsteilkoppelfeld mindestens eine Verbindungsleitung für jede externe Rechnung angeschlossen. Es können dann Verbindungsanforderungen für externen Verkehr bei Freisein einer in die betreffende externe Richtung führenden Verbindungsleitung bereits alleine über das Eingangsteilkoppelfeld weitergeführt werden, bei dem der diesen Verbindungsweg anfordernde Teilnehmeranschluß angeschlossen ist. Ist keine in die angeforderte externe Richtung hinführende Verbindungsleitung frei, so kann der Verbindungsweg zunächst zu einem Hilfsteilkoppelfeld weitergeführt werden und von dort zu einem Eingangsteilkoppelfeld, bei dem eine Verbindungsleitung für die angeforderte externe Richtung frei ist. Bei Bedarf kann der Verbindungsweg sogar auch über eines der Zusatzteilkoppelfelder geführt werden. Der Vermittlungsbetrieb für Externverkehr wird also ganz entsprechend wie der Vermittlungsbetrieb für Internverkehr abgewickelt. Dadurch ergibt sich eine sehr gute Ausnutzung der in externe Richtungen führenden Verbindungsleitungen.

Bei der in der Figur gezeigten Vermittlungsanlage werden die Teilkoppelfelder individuell gesteuert. Hierzu hat jedes Eingangsteilkoppelfeld ein Steuerwerk, das außer den Vermittlungsvorgängen für sein Eingangsteilkoppelfeld die Umrechnung von gewählten Rufnummern in Anschlußlagen für die an seinem Eingangsteilkoppelfeld erreichbaren Teilnehmeranschlüsse durchführt. So haben die Eingangsteilkoppelfelder 1TG1 ... 1TG32 ... 16TG1 ... 16TG32 die Steuerwerke 1S1 ... 1S32 ... 16S1 ... 16S32. Beim Eingangsteilkoppelfeld 1TG1 ist noch gezeigt, wie das zugehörige Steuerwerk 1S1 über den Datenbus 1D1 mit den Mehrfachanschlußschaltungen 1L11 ... 1L14 verbunden ist, sowie mit der Einstelleinrichtung 1E1, welche aufgrund von Steuersignalen Durchschaltungen im Eingangsteilkoppelfeld 1TG1 vornimmt. Die Hilfsteilkoppelfelder 1HKa, 1HKb ... 16HKa und 16HKb haben die Steuerwerke 1Sa, 1Sb ... 16Sa und 16Sb. Beim Hilfsteilkoppelfeld 1HKa ist ebenfalls gezeigt, wie das zugehörige Steuerwerk 1Sa über den Datenbus 1Da mit den Mehrfachanschlußschaltungen 1H1 ... 1H36 verbunden ist. An diesen Datenbus ist dort auch noch die Einstelleinrichtung 1Ea angeschlos-

sen. Auch die bereits erwähnten Zusatzteilkoppelfelder ZK1a...ZK1d haben jeweils ein Steuerwerk, nämlich die Steuerwerke S1a, S1b, S1c und S1d.

Die Steuerwerke, welche zu Hilfsteilkoppelfeldern und zu Zusatzteilkoppelfeldern gehören, führen keine Umrechnungen von gewählten Rufnummern durch. Sie veranlassen lediglich gegebenenfalls die Weitergabe von Rufnummern, die zu ihnen gelangen, zu anderen Teilkoppelfeldern. Bei Verbindungsanforderungen, bei denen durch des zum Ursprungseingangsteilkoppelfeld gehörende Steuerwerk die Umrechnung der gewählten Rufnummern nicht durchführen kann, weil sie zu einem anderen Eingangsteilkoppelfeld führen, wird nämlich durch dieses Steuerwerk jeweils ein Verbindungswegabschnitt zu einem Hilfsteilkoppelfeld belegt, dessen Steuerwerk seinerseits die gewählte Rufnummer zu den anderen Eingangsteilkoppelfeldern weiterleitet und dann jeweils einen weiteren Verbindungsabschnitt belegt, der zu demjenigen Eingangsteilkoppelfeld führt, dessen Steuerwerk die Umrechenbarkeit der Rufnummer meldet und dann nach Umrechnung den Verbindungsweg zum angeforderten Teilnehmeranschluß über sein Eingangsteilkoppelfeld durchschaltet. In entsprechender Weise werden auch die Zusatzteilkoppelfelder samt zugehörigen Steuerwerken gegebenenfalls in Anspruch genommen.

Es wurde bereits angegeben, daß in dem Fall, bei dem ein Verbindungsweg zwischen zwei Teilnehmeranschlüssen ein und desselben Eingangsteilkoppelfeldes herzustellen ist, hierfür lediglich das zugehörige Steuerwerk samt Einstelleinrichtung in Anspruch zu nehmen ist. Ist zum Beispiel ein Verbindungsweg zwischen dem Teilnehmeranschluß T1 und dem Teilnehmeranschluß T64 des Eingangsteilkoppelfeldes 1TG1 herzustellen, so wird durch das Steuerwerk 1S1 beispielsweise die über den Teilnehmeranschluß T1 und den Datenbus 1D1 gelieferte Rufnummer in die Anschlußlage des durch die Rufnummer bezeichneten Teilnehmeranschlusses T64 umgerechnet, worauf unter Mitwirkung der Einstelleinrichtung 1E1 der Verbindungsweg zwischen den Teilnehmeranschlüssen T1 und T64 über das Eingangsteilkoppelfeld 1TG1 zusammengeschaltet wird. Ein Verbindungsweg zwischen Teilnehmeranschlüssen verschiedener Eingangsteilkoppelfelder wird dagegen jeweils über ein einziges Hilfsteilkoppelfeld, z.B. über das Hilfsteilkoppelfeld 1HKa zusammengeschaltet. Wird beispielsweise über den Teilnehmeranschluß T1 eine Rufnummer geliefert, welche einen Verbindungsweg zum Teilnehmeranschluß T1985 beim Eingangsteilkoppelfeld TG32 anfordert, so ergibt sich bei einem Umrechnungsversuch mit Hilfe des Steuerwerks 1S1, daß hier die Anschlußlage dieses gewünschten Teilnehmeranschlusses T1985 nicht feststellbar ist, da die Umrechnung der in diesem Fall gewählten Rufnummer dort nicht durchführbar ist. Durch das Steuerwerk 1S1 des hier als Ursprungseingangsteilkoppelfeld wirkenden Teilkoppelfeldes 1TG1 wird dann ein Verbindungswegabschnitt zum Hilfsteilkoppelfeld 1HKa belegt, der über eine der Zwischenleitungen 1HA1 führt. Über diesen Verbindungswegabschnitt wird dann die gewählte Rufnummer über die Mehrfachanschlußschaltung 1H1 und den Datenbus 1Da zum Steuerwerk 1Sa geschickt, das seinerseits diese Rufnummer zu den anderen Eingangsteilkoppelfeldern über das Hilfsteilkoppelfeld 1HK2 weiterleitet. In diesem Fall wird hier das Steuerwerk 1S32 des Eingangsteilkoppelfeldes 1TG32, welches hier das Zieleingangsteilkoppelfeld ist, die Umrechenbarkeit der gewählten Rufnummer zum Steuerwerk 1Sa melden, und zwar über eine der Zwischenleitungen 1HA32. Das Steuerwerk 1Sa belegt dann den über diese Zwischenleitung weiterführenden Verbindungsabschnitt, womit der Verbindungsweg zum Ursprungseingangsteilkoppelfeld 1TG1 über das Hilfsteilkoppelfeld 1HKa bereits zum Zieleingangsteilkoppelfeld 1TG32 weitergeführt ist. Innerhalb des Hilfsteilkoppelfeldes 1HKa sind nämlich die gemäß vorstehender Beschreibung bereits belegten beiden Zwischenleitungen mit Hilfe des Steuerwerkes 1Sa und der Einstelleinrichtung 1Ea zusammengeschaltet worden. Das Steuerwerk 1S32 schaltet dann den Verbindungsweg nach Umrechnung der gewählten Rufnummer in die Anschlußlage des damit bezeichneten Teilnehmeranschlusses T1985 über sein Eingangsteilkoppelfeld 1TG32 zu diesem angeforderten Teilnehmeranschluß T1985 durch. Offensichtlich können in dieser Weise Verbindungswege zwischen allen Teilnehmeranschlüssen der Eingangsteilkoppelfelder 1TG1...1TG32 hergestellt werden, wobei sie über eines der Hilfsteilkoppelfelder 1HKa... HKb geführt werden. Es können hier zwischen zwei Teilkoppelfeldern jeweils mehrere Verbindungswege durchgeschaltet werden. Außerdem können sich auch die beiden Hilfsteilkoppelfelder 1HKa und 1HKb vertreten. Gassenbesetzt kann daher weitgehend vermieden werden, insbesondere dann, wenn die Teilkoppelfelder beispielsweise als vollkommene Bündel ausgebildet sind. Die beiden beschriebenen Beispiele für Verbindungswege bestätigen, daß selbsttätig jeweils der kürzeste mögliche Verbindungsweg zwischen den zu verbindenden Teilnehmeranschlüssen gefunden wird (siehe auch DPS 12 62 358).

Das in der Figur gezeigte Koppelfeld hat nun nicht nur die Teilkoppelfeldgruppe I sondern auch weitere solche Teilkoppelfeldgruppen, von denen die letzte die Teilkoppelfeldgruppe XVI ist. Zur Teilkoppelfeldgruppe XVI gehören die Eingangsteilkoppelfelder 16TG1...16TG32 mit den zugehörenden Steuerwerken 16S1... 16S32 sowie die Hilfsteilkoppelfelder 16HKa und 16HKb mit den Steuerwerken 16Sa und 16Sb. Bei Verbindungsanforderungen, bei denen das Ursprungseingangsteilkoppelfeld und das Zieleingangsteilkoppelfeld zu verschiedenen Teilkoppelfeldgruppen gehören, wird dann der Verbindungsweg jeweils über eines der Zusatzteilkoppelfelder ZK1a ... ZK1d geführt. Dies wird hier jeweils dadurch ausgelöst, daß kein Eingangsteilkoppelfeld der Teilkoppelfeldgruppe mit dem Ursprungseingangsteilkoppelfeld die Umrechenbarkeit der gewählten Rufnummer meldet.

Ist z.B. ein Verbindungsweg zwischen dem Teilnehmeranschluß T1 beim Eingangsteilkoppelfeld 1TG1 und dem Teilnehmeranschluß T30721 beim Eingangsteilkoppelfeld 16TG1 aufgrund der beim Teilnehmeranschluß T1 gewählten Rufnummer herzustellen, so spielen sich folgende Vorgänge ab. Zunächst wird durch das Steuerwerk 1S1 des Ursprungseingangsteilkoppelfeldes 1TG1 die Nichtumrechenbarkeit der gewählten Rufnummer festgestellt. Daraufhin wird in der bereits beschriebenen Weise ein Verbindungswegabschnitt zu einem Hilfsteilkoppelfeld, beispielsweise zum Hilfsteilkoppelfeld 1HKa belegt. Das zugehörige Steuerwerk 1Sa stellt dann fest, daß auch keines der übrigen Steuerwerke der Eingangsteilkoppelfelder der Teilkoppelfeldgruppe I die Umrechenbarkeit der gewählten Rufnummer meldet. Hierzu werden jeweils vorübergehend Verbindungswegabschnitte belegt, die zu Zwischenleitungen gehören, welche zu diesen Eingangsteilkoppelfeldern führen. Das Steuerwerk S1a leitet dann die gewählte Rufnummer zu einem Steuerwerk eines Zusatzteilkoppelfeldes weiter, beispielsweise zum Steuerwerk S1a des Zusatzteilkoppelfeldes ZK1a, und zwar über eine der Zwischenleitungen 1ZA1A. Dieses Steuerwerk S1a leitet dann diese Rufnummer ebenfalls weiter und zwar beispielsweise über eine der Zwischenleitungen 16ZB1A zum Hilfsteilkoppelfeld 16HKb mit dem Steuerwerk 16Sb. In der bereits beschriebenen Technik für die Herstellung von Verbindungswegen in ein und derselben Teilkoppelfeldgruppe wird dann der Verbindungsweg von dort mit Hilfe der gewählten Rufnummer zum Zieleingangsteilkoppelfeld 16TG1 über eine der Zwischenleitungen 16HA32 weitergeleitet, welches den Teilnehmeranschluß T30721 hat. Dessen Steuerwerk 16S1 hat nämlich die Umrechenbarkeit der gewählten Rufnummer gemeldet und schaltet dann nach Umrechnung den Verbindungsweg zum angeforderten Teilnehmeranschluß T30721 über sein Eingangsteilkoppelfeld 16TG1 durch. In entsprechender Weise wird der Verbindungsweg über das Zusatzteilkoppelfeld 16HKb durch das zugehörige Steuerwerk 16Sb durchgeschaltet, ferner wird er mit Hilfe des Steuerwerks S1a und der Einstelleinrichtung E1a beim Zusatzteilkoppelfeld ZK1a durchgeschaltet. Die Steuerwerke 1S1 und 1Sa haben bereits vorher beim Ursprungseingangsteilkoppelfeld 1TG1 und beim Hilfsteilkoppelfeld 1HKa den Verbindungsweg durchgeschaltet.

Der Verbindungsweg vom Teilnehmeranschluß T1 führt also über die Mehrfachanschlußschaltung 1L11, das Ursprungseingangsteilkoppelfeld 1TG1, eine der Zwischenleitungen 1HA1 zur Mehrfachanschlußschaltung 1H1 und zum Hilfsteilkoppelfeld 1HKa. Von dort führt er weiter über die Mehrfachanschlußschaltung 1H33 und eine der Zwischenleitungen 1ZA1A zur Mehrfachanschlußschaltung Z1a1 zum Zusatzteilkoppelfeld ZK1a. Von dort ist er über die Mehrfachanschlußschaltung Z1a4, eine der Zwischenleitungen 16ZB1A, das Hilfsteilkoppelfeld 16HKb, eine der Zwischenleitungen 16HA32 und das Zieleingangsteilkoppelfeld 16TG1 zum Zielteilnehmeranschluß T30721 weitergeführt.

Da hier eine größere Anzahl von Teilkoppelfeldgruppen vorhanden sind, ist vom Zusatzteilkoppelfeld ZK1a mit Hilfe des zugehörigen Steuerwerks S1a in der Regel bei mehreren und unter Umständen sogar bei allen Teilkoppelfeldgruppen außer bei der Teilkoppelfeldgruppe mit dem Ursprungseingangsteilkoppelfeld mit Hilfe der gewählten Rufnummer das Zieleingangsteilkoppelfeld festzustellen, welches die Umrechenbarkeit dieser Rufnummer meldet, damit dorthin der Verbindungsweg entsprechend der bereits beschriebenen Weise hergestellt werden kann. Hierbei sind also vorübergehend jeweils über verschiedene Zwischenleitungen führende Verbindungswegabschnitte zu belegen. Diese vorübergehenden Belegungen nehmen jedoch im Vergleich zu Belegungen für Sprechverbindungen nur jeweils kurze Zeitspannen in Anspruch. Die Herstellung von Verbindungswegen für solche Sprechverbindungen wird daher hierdurch nur geringfügig beeinträchtigt. Dagegen ist die Belastung von Steuereinrichtungen vergleichsweise größer. Zweckmässigerweise hat jedes Hilfsteilkoppelfeld und jedes Zusatzteilkoppelfeld zwei Steuerwerke, die im Lastteilverfahren arbeiten und die einander vertreten können. Eine Blockierung des Verbindungsaufbaues kann auch dadurch vermieden werden, daß bei der Weiterleitung gewählter Rufnummern vom jeweiligen Teilkoppelfeld aus unter den in Richtung zum Zieleingangsteilkoppelfeld weiterführenden Verbindungsabschnitten gewechselt· wird, um ein anderes Hilfsteilkoppelfeld bzw. Zusatzteilkoppelfeld zu erreichen, wenn das beim vorher erreichten Teilkoppelfeld arbeitende Steuerwerk sich als durch Vermittlungsvorgänge überlastet meldet. Dadurch wird also die Weitergabe von Rufnummern durch ein überlastetes Steuerwerk abgewehrt. Diese Abwehr kann auch bereits vor einer Überlastung vorsorglich einsetzen, um das Steuerwerk für die Abwicklung anderer Vermittlungsvorgänge, beispielsweise für das Auftrennen von Verbindungswegen freizuhalten. Obwohl hier für die Herstellung von Verbindungswegen unter Umständen mehrere Steuerwerke in Anspruch zu nehmen sind, kann dadurch vermieden werden, daß endere Vermittlungsvorgänge in unzulässiger Weise blockiert werden. Falls erforderlich, können hierzu noch weitere Maßnahmen vorgesehen werden, beispielsweise eine vorübergehende Einschränkung derjenigen Betriebsmöglichkeiten, die für die Herstellung bzw. bei der Auftrennung von Verbindungswegen mehr als die Mindestanzahl von Steuervorgängen oder die Steuervorgänge für darüber hinausgehende Aufträge für Teilnehmeranschlüsse erfordern (siehe beispielsweise DE—C—1 940 502).

Die beschriebenen Betriebsbeispiele zeigen, daß in einheitlicher Steuerungstechnik Verbindungswege hergestellt werden können, die Teilnehmeranschlüsse ein und desselben Eingangsteilkoppelfeldes, Teilnehmeranschlüsse verschiedener Eingangsteilkoppelfelder ein und derselben Teilkoppelfeldgruppe und Teilnehmeranschlüsse von Eingangsteilkoppelfeldern verschiedener Teilkoppelfeldgruppen verbinden. Dabei wird selbsttätig auch jeweils der kürzeste Verbindungsweg zwischen solchen Teilnehmeranschlüssen hergestellt. Vorteilhafterweise führen bei all diesen verschiedenen Betriebsbeispielen die Steuerwerke jeweils einander entsprechende Vorgänge aus. Sie können daher auch jeweils weitgehend übereinstimmend aufgebaut sein. Änderungen von Anschlußlagen haben lediglich Änderungen bei den Steuerwerken zur Folge, welche zu den betroffenen Eingangsteilkoppelfeldern gehören. Die übrigen Steuerwerke bleiben davon unberührt. Das Koppelfeld hat daher eine Struktur, die ermöglicht, daß die Vermittlungsanlage baukastenartig aus untereinander weitgehend gleichen Teileinrichtungen aufgebaut wird. Dies gilt auch für Erweiterungen der Vermittlungsanlage.

Eine derartige Erweiterung ist auch in der Figur angedeutet. Dort sind nämlich außer den Zusatzteilkoppelfeldern ZK1a, ZK1b, ZK1c und ZK1d samt zugehöriger Steuerwerke S1a, S1b, S1c und S1d noch weitere Zusatzteilkoppelfelder gezeigt, wie die Zusatzteilkoppelfelder ZK4a, ZK4b, ZK4c und ZK4d samt zugehöriger Steuerwerke S4a, S4b, S4c und S4d. Diese weiteren Zusatzteilkoppelfelder sind mit den Zusatzteilkoppelfeldern der Teilkoppelfeldgruppen I . . . XVI über die Zwischenleitungen ZZ verbunden, welche in der Figur allerdings lediglich schematisch angedeutet sind. Die Zusatzteilkoppelfelder ZK4a . . . ZK4d und die entsprechenden weiteren Zusatzteilkoppelfelder sind ihrerseits mit eigenen, in der Figur nicht gezeigten Teilkoppelfeldgruppen verbunden. Unter Ausnutzung der Zwischenleitungen ZZ können dann auch Verbindungswege zwischen Teilnehmeranschlüssen aller dieser Teilkoppelfeldgruppen hergestellt werden. Die Zwischenleitungen zwischen den Zusatzteilkoppelfeldern verschiedener Teilkoppelfeldgruppen können auch maschenförmig geführt werden. In der Figur ist angedeutet, daß sie bei den Zusatzteilkoppelfeldern entsprechend wie die anderen Zwischenleitungen angeschlossen sind, welche zu den Hilfsteilkoppelfeldern führen. So sind beispielsweise beim Zusatzteilkoppelfeld ZK1a zu anderen Zusatzteilkoppelfeldern führende Zwischenleitungen über den Mehrfachanschluß Z1az angeschlossen. Das in der Figur gezeigte Koppelfeld kann sinngemäß durch weitere Teilkoppelfelder erweitert werden, ohne daß dabei Änderungen bei der Betriebsweise der zu den Teilkoppelfeldern gehörenden Steuerwerke erforderlich sind. Zweckmässigerweise werden auch die Zwischenleitungen ZZ derart angeordnet, daß zwischen zwei die Zusatzteilkoppelfelder jeweils mehrere Verbindungswege durchschaltbar sind.

**Patentansprüche**

1. Koppelfeld mit Umkehrgruppierung und dadurch gegebener Verbindungsdurchschaltung mit Verbindungswegeumkehr, bei dem die Teilnehmeranschlüsse an Eingänge von Eingangsteilkoppelfeldern angeschlossen sind und bei dem weitere Teilkoppelfelder vorgesehen sind, insbesondere für Fernsprechvermittlungsanlagen, dadurch gekennzeichnet, daß die die Teilkoppelfelder (1TG1 . . . 16TG32, 1HKa . . . 16HKb, ZK1a . . . ZK4d) einschließlich Eingangsteilkoppelfelder (1TG1 . . . 16TG32) verbindenen Zwischenleitungen (z.B. 1HA1 . . . 16HB32, 1ZA1A . . . 16ZB1B . . . , ZZ) bei jedem Teilkoppelfeld an zugehörige Eingänge gemäß Umkehrgruppierung bezüglich des betreffenden Teilkoppelfeldes selber angeschlossen sind und die Verbindungswege daher auch innerhalb der Teilkoppelfelder umkehren.

2. Koppelfeld nach Anspruch 1, dadurch gekennzeichnet, daß die Teilnehmeranschlüsse, die Verbindungssätze und weitere pro Verbindung erforderliche Schaltglieder in gleicher Weise an die Eingänge von Eingangsteilkoppelfeldern (1TG1 . . . 16TG32) angeschlossen sind.

3. Koppelfeld nach Anspruch 1 oder 2, dadurch gekennzeichnet, daß zwischen zwei Teilkoppelfelder jeweils mehrere Verbindungswege durchschaltbar sind.

4. Koppelfeld nach einem der Ansprüche 1 bis 3, dadurch gekennzeichnet, daß ein Teilkoppelfeld jeweils durch einen Raumvielfachkoppler gebildet ist.

5. Koppelfeld nach einem der Ansprüche 1 bis 3, dadurch gekennzeichnet, daß ein Teilkoppelfeld jeweils durch einen Zeitkanalkoppler gebildet ist.

6. Koppelfeld nach einem der vorhergehenden Ansprüche, dadurch gekennzeichnet, daß die Verbindungsleitungen (V1 . . . V32) für Externverkehr an Eingänge der Eingangsteilkoppelfelder (1TG1 . . . 16TG32) angeschlossen sind.

7. Koppelfeld nach Anspruch 6, dadurch gekennzeichnet, daß bei jedem Eingangsteilkoppelfeld mindestens eine Verbindungsleitung für jede externe Richtung angeschlossen ist.

8. Koppelfeld nach einem der vorhergehenden Ansprüche, dessen Teilkoppelfelder individuell gesteuert werden, dadurch gekennzeichnet, daß jedes Eingangsteilkoppelfeld (1TG1 ... 1TG32) ein Steuerwerk (z.B. 1S1) hat, das außer den Vermittlungsvorgängen für sein Eingangsteilkoppelfeld (1TG1) die Umrechnung von gewählten Rufnummern in Anschlußlagen für die an seinem Eingangskoppelfeld erreichbaren Teilnehmeranschlüsse (T1 ... T64) durchführt, daß die Eingangsteilkoppelfelder (1TG1 ... 1TG32) über mehrere Hilfsteilkoppelfelder (1HKa, 1HKb) mit eigenen Steuerwerken (1Sa ... 1Sb) verbunden sind, daß die Verbindungswege zwischen verschiedenen Eingangsteilkoppelfeldern (z.B. 1TG1, 1TG32) über jeweils ein einziges Hilfsteilkoppelfeld (z.B. 1HKa) zusammenschaltbar sind, daß bei Verbindungsanforderungen, bei denen durch das zum Ursprungseingangsteilkoppelfeld (1TG1) gehörende Steuerwerk (1S1) die Umrechnung der gewählten Rufnummer nicht durchführbar ist, weil sie zu einem anderen Eingangsteilkoppelfeld (1TG32) führen, durch dieses Steuerwerk (1S1) jeweils ein Verbindungswegeabschnitt zu einem Hilfsteilkoppelfeld (z.B. 1HKa) belegt wird, dessen Steuerwerk (1Sa) seinerseits die gewählte Rufnummer zu den anderen Eingangsteilkoppelfeldern weiterleitet und dann jeweils einen weiteren Verbindungsabschnitt belegt, der zu demjenigen Eingangsteilkoppelfeld (1TG32) führt, dessen Steuerwerk (1S32) die Umrechenbarkeit der Rufnummer meldet und dann nach Umrechnung den Verbindungsweg zum angeforderten Teilnehmeranschluß (T1985) über sein Eingangsteilkoppelfeld (1TG32) durchschaltet.

9. Koppelfeld nach Anspruch 8, dadurch gekennzeichnet, daß die eine Teilkoppelfeldgruppe (I) bildende Anordnung mit Eingangsteilkoppelfeldern und Hilfsteilkoppelfeldern samt zugehörenden individuellen Steuerwerken mehrfach vorgesehen ist, daß diese Teilkoppelfeldgruppen (I ... XVI) ihrerseits über Zusatzteilkoppelfelder (ZK1a ... ZK1d) wie die Eingangsteilkoppelfelder über Hilfsteilkoppelfelder verbunden sind, daß bei Verbindungsanforderungen, bei denen das Ursprungseingangsteilkoppelfeld (1TG1) und das Zieleingangsteilkoppelfeld (16TG1) zu verschiedenen Teilkoppelfeldgruppen (I, XVI) gehören, der Verbindungsweg jeweils über ein Zusatzteilkoppelfeld (ZK1a) geführt wird, und zwar ausgelöst dadurch, daß kein Eingangsteilkoppelfeld der Teilkoppelfeldgruppe (I) mit dem Ursprungseingangsteilkoppelfeld (1TG1) die Umrechenbarkeit der gewählten Rufnummer meldet, daß das Steuerwerk (S1a) des betreffenden Zusatzteilkoppelfeldes (ZK1a) die gewählte Rufnummer über die Hilfsteilkoppelfelder (... 16HKa, 16HKb) der anderen Teilkoppelfeldgruppen (... XVI) zu deren Eingangsteilkoppelfelder (... 16TG1 ... 16TG32) weiterleitet und daß dann weitere Verbindungsabschnitte belegt werden, die über ein Hilfsteilkoppelfeld (16HKa) zu demjenigen Eingangsteilkoppelfeld (16TG1) führen, dessen Steuerwerk (16S1) die Umrechenbarkeit der Rufnummer meldet und dann nach Umrechnung den Verbindungsweg zum angeforderten Teilnehmeranschluß (T30721) über sein Eingangsteilkoppelfeld (16TG1) durchschaltet.

10. Koppelfeld nach Anspruch 9, dadurch gekennzeichnet, daß die Zusatzteilkoppelfelder (ZK1a ... ZK1d) der erwähnten Teilkoppelfeldgruppen (I ... XVI) mit weiteren Zusatzteilkoppelfeldern (... ZK4a ... ZK4d) verbunden sind, die ihrerseits mit eigenen Teilkoppelfeldgruppen verbinden sind, so daß Verbindungswege zwischen Teinehmeranschlüssen aller vorhandenen Teilkoppelfeldgruppen herstellbar sind.

11. Koppelfeld nach einem der Ansprüche 8 bis 10, dadurch gekennzeichnet, daß jedes Hilfsteilkoppelfeld (1HKa ... 16HKb) und jedes Zusatzteilkoppelfeld (ZK1a ... ZK4d) zwei Steuerwerke hat, die einander vertreten können.

**Revendications**

1. Champ de couplage à groupage à rebroussement et à transmission directe de liaisons, déterminée par ce groupage, avec rebroussement des voies de jonction, dans lequel les postes d'abonné sont racordés à des entrées de champs de couplage partiels d'entrée et dans lequel sont prévus d'autres champs de couplage partiels, notamment pour das installations de transmissions téléphoniques, caractérisé en ce que les lignes intermédiaires (par exemple 1HA1 ... 16HB32, 1ZA1A ... 16ZB1B ... , ZZ), reliant les champs de couplage partiels (1TG1 ... 16TG32, 1HKa ... 16HKb, ZK1a ... ZK4d) y compris des champs de couplage partiels d'entrée (1TG1 ... 16TG32), sont reccordés dans chaque champ de couplage partiel à des entrées associées, conformément au groupage à rebroussement en ce qui concerne le champ de couplage partiel concerné, et que par conséquent les voies de jonction présentent également un rebroussement à l'intérieur des champs de couplage partiels.

2. Champ de couplage selon la revendication 1, caractérisé en ce que les postes d'abonné,, les jeux d'organes de jonction et d'autres organes de commutation nécessaires pour chaque liaison sont raccordés de la même manière aux entrées de champs de couplage partiels d'entrée (1TG1 ... 16TG32).

3. Champ de couplage selon la revendication 1 ou 2, caractérisé en ce que plusieurs voies de jonction peuvent être interconnectées directement entre deux champs de couplage partiels.

4. Champ de couplage selon l'une des revendications 1 à 3, caractérisé en ce qu'un champ de couplage partiel est formé respectivement par un multiple de couplage spatial.

5. Champ de couplage selon l'une des revendications 1 à 3, caractérisé en ce qu'un champ de couplage partiel est formé respectivement par un coupleur de canaux temporels.

6. Champ de couplage selon l'une des revendications précédentes, caractérisé en ce que les lignes de jonction (V1 ... V32) pour un trafic extérieur sont reccordées à des entrées des champs de couplage partiels d'entrée (1TG1 ... 16TG32).

7. Champ de couplage selon l'une des revendication 6, caractérisé en ce que dans chaque champ de couplage partiel d'entrée, au moins une ligne de jonction est raccordée pour chaque direction extérieure.

8. Champ de couplage selon l'une des revendications précédentes, dont les champs de couplage partiels sont commandés individuellement, caractérisé en ce que chaque champ de couplage partiel d'entrée (1TG1 ... 1TG32) possède un mécanisme de commande (par exeple 1S1), qui exécute, outre les processus de transmission pour son champ de couplage d'entrée (1TG1), la conversion de numéros d'appel sélectionné en des positions de raccordement pour les postes d'abonnés (T1 ... T64) pouvant être atteints dans son champ de couplage d'entrée, que les champs de couplage partiels d'entrée (1TG1 ... 1TG32) sont reliés par l'intermédiaire de plusieurs champs de couplage partiels (1HKa, 1HKb) à des méchanismes particuliers de commande (1Sa ... 1Sb), que les voies de jonction entre différents champs de couplage partiels d'entrée (par exemple 1TG1, 1TG32) peuvent être interconnectés par l'intermédiaire respectivement d'un seul champ de couplage partiel auxiliaire (par exemple 1HKa), que dans le cas de demandes de communications, pour lesquelles la conversion du numéro d'appel sélectionné ne peut pas être exécutée par le mécanisme de commande (1S1), faisant partie du champ de couplage partiel d'entrée de départ (1TG1) parce qu'elles aboutissent à un autre champ de couplage partiel d'entrée (1TG32), le mécanisme de commande (1S1) occupe respectivement une section de la jonction aboutissant à un champ de couplage partiel auxiliaire (par exemple 1HKa), sont le mécanisme de commande (1SA) retransmet pour sa part le numéro d'appel sélectionné vers les autres champs de couplage partiels d'entrée et occupe alors une autre section de jonction, qui aboutit au champ de couplage partiel d'entrée (1TG32) dont le mécanisme de commande (1S32) signale la possibilité de conversion du numéro d'appel et interconnecte ensuite directement, après conversion, la voie de jonction jusqu'au poste d'abonné demandé (T1985) par l'intermédiaire de son champ de couplage partiel d'entrée (1TG32).

9. Couplage selon la revendication 8, caractérisé en ce qu'il est prévu plusieurs dispositifs constituant un groupe (I) de champs de couplage partiels et munis de champs de couplage partiels d'entrée et de champs de couplage partiels auxiliaires ainsi que de mécanismes de commande individuels associés, que ces groupes (I ... XVI) de champs de couplage partiels sont reliés, pour leur part, par l'intermédiaire de champs de couplage partiels supplémentaires (ZK1a ... ZK1d) comme les champs de couplage d'entrée par l'intermédiaire de champs de couplage partiels auxiliaires, que dans le cas de demandes de communications, pour lesquelles le champ de couplage partiel d'entrée de départ (1TG1) et le champ de couplage partiel d'entrée d'arrivée (15TG1) font partie de groupes (I, XVI) différents de champs de couplage partiels, la voie de jonction est établie par l'intermédiaire d'un champ de couplage partiel supplémentaire (ZK1a), cette opération étant déclenchée par le fait qu'aucun champ de couplage partiel d'entrée du groupe (I) de champs de couplages partiels, incluant le champ de couplage partiel d'entrés de départ (1TG1) signale la possibilité de conversion du numéro d'appel sélectionné, que le mécanisme de commande (S1a) du champ de couplage partiel supplémentaire concerné (ZK1a) retransmet le numéro d'appel sélectionné par l'intermédiaire des champs de couplage partiels auxiliaires (... 16HKa, 16HKb) des autres groupes (... XVI) de champs de couplage partiels à leurs champs de couplage partiels d'entrée (... 16TG1; 16TG32) et qu'alors d'autres sections de jonction sont occupées, qui aboutissent par l'intermédiaire d'un champ de couplage partiel auxiliaire 16HKa) au champ de couplage partiel d'entrée (16TG1) dont le mécanisme de commande (16S1) signale la possibilité de conversion du numéro d'appel et, après conversion, interconnects alors directement la voie de jonction aboutissant au poste d'abonné demandé (T30721), par l'intermédiaire de son champ de couplage partiel d'entrée (16TG1).

10. Champ de couplage selon la revendication 9, caractérisé en ce que les champs de couplage partiels supplémentaires (ZK1a ... ZK1d) des groupes (I ... XVI) mentionnés de champs de couplage partiels sont reliés à d'autres champs de couplage partiels supplémentaires (... ZK4a ... ZK4d), qui, pour leur part, sont reliés à des groupes particuliers de champs de couplage, de sorte que des voies de jonction doivent être établies entre des postes d'abonné de tous les groupes existants de champs de couplage partiels.

11. Champ de couplage selon l'une des revendications 8 à 10, caractérisé en ce que chaque champ de couplage partiel auxiliaire (1HZa ... 16HKb) et chaque champ de couplage partiel supplémentaire (ZK1a ...

ZK4d) possède deux mécanismes de commande qui peuvent se remplacer réciproquement.

### Claims

1. A switching network with reverse trunking scheme resulting in connection switch through with connection path reversal, wherein the subscriber terminals are connected to inputs of input subsidiary switching networks and wherein further subsidiary switching networks are provided, 'in particular for telephone exchange systems, characterised in that in each subsidiary switching network the intermediate lines (e.g. 1HA1 ... 16HB32, 1ZA1A ... 16ZB1B ... ZZ) which connect the subsidiary switching networks (1TG1 ... 16TG32, 1HKa ... 16HKb, ZK1a ... ZK4d) including input subsidiary switching networks (1TG1 ... 16TG32) are connected to associated inputs in accordance with a reverse trunking scheme in respect of the subsidiary switching network in question and therefore the connection paths are also reversed within the subsidiary switching networks.

2. Switching networks as claimed in claim 1 characterised in that the subscriber terminals, the connection sets, and further switching elements required in respect of each connection are connected in identical fashion to the inputs of input subsidiary switching networks (1TG1 ... 16TG32).

3. Switching network as claimed in claim 1 or 2, characterised in that a plurality of connection paths can be switched through between two subsidiary switching networks.

4. Switching network as claimed in one of the claims 1 to 3, characterised in that each subsidiary switching network is formed by a space multiplex switch.

5. Switching network as claimed in one of the claims 1 to 3, characterised in that each subsidiary switching network is formed by a time channel switch.

6. Switching network as claimed in one of the preceding claims, characterised in that the connection lines (VI ... V32) for external traffic are connected to inputs of the input subsidiary switching networks (1TG1 ... 16TG32).

7. Switching network as claimed in claim 6, characterised in that in each input subsidiary switching network at least one connection line is connected for each external direction.

8. Switching network as claimed in one of the preceding claims, wherein the subsidiary switching networks are individually controlled, characterised in that each input subsidiary switching network (1TG1 ... 1TG32) has a control unit (e.g. 1S1), which in addition to the switching procedures for its input subsidiary switching network (1TG1) carries out the conversion of dialled subscriber numbers into connection positions for the subscriber terminals (T1 ... T64) which can be reached via its input switching network, that the input subsidiary switching networks (1TG1 ... 1TG32) are connected via a plurality of auxiliary subsidiary switching networks (1HKa, 1HKb) to their own control units (1Sa ... 1Sb), that the connection paths between various input subsidiary switching networks (e.g. 1TG1, 1TG32) can in each case be interconnected via one single auxiliary subsidiary switching network (e.g. 1HKa), that in the event of connection requests where the control unit (1S1) assigned to the original input subsidiary switching network (1TG1) cannot convert the selected subscriber numbers because they lead to a different input subsidiary switching network (1TG32), this control unit (1S1) seizes a connection path section to an auxiliary subsidiary switching network (e.g. 1HKa) whose control unit (1Sa) itself forwards the dialled subscriber number to the other input subsidiary switching networks and then seizes a further connection section which leads to that input subsidiary switching network (1TG32) whose control unit (1S32) reports that the subscriber number is convertible and then, following conversion, switches through the connection path to the requested subscriber terminal (T1985) via its input subsidiary switching network (1TG32).

9. Switching network as claimed in claim 8, characterised in that the arrangement which forms a group of subsidiary switching networks (I) is provided with a multiplicity of input subsidiary switching networks and auxiliary subsidiary switching networks together with associated individual control units, that these subsidiary switching network groups (I ... XVI) are themselves connected via additional subsidiary switching networks (ZK1a ... ZK1d) like the input subsidiary switching networks via auxiliary subsidiary switching networks, that in the case of connection requests where the original input subsidiary switching network (1TG1) and the target input subsidiary switching network (16TG1) belong to different subsidiary switching network groups (I, XVI), the connection path extends via an additional subsidiary switching network (ZK1a) and in fact brought about in that no input subsidiary switching network within the subsidiary switching network group (I) containing the original input subsidiary switching network (1, TG1) reports the convertibility of the dialled subscriber number, that the control unit (S1a) of the additional subsidiary switching network (ZK1a) in question forwards the dialled subscriber number via the auxiliary subsidiary switching networks (... 16HKa, 16HKb) of the other subsidiary switching network groups (... XVI) to the input subsidiary switching networks thereof (... 16TG1 ... 16TG32), and that then further connection sections are seized which extend via an auxiliary subsidiary switching network (16HKa) to that input

**0 016 396**

subsidiary switching network (16TG1) whose control unit (16S1) reports that the subscriber number is convertible and then, when conversion has been carried out, switches through the connection path to the requested subscriber terminal (T30721) via its input subsidiary switching network (16TG1).

10. Switching network as claimed in claim 9, characterised in that the additional subsidiary switching networks (ZK1a ... ZK1d) of the aforementioned subsidiary switching network groups (I ... XVI) are connected to further additional subsidiary switching networks (... ZK4a ... ZK4d) which are themselves connected to individually assigned subsidiary switching network groups, so that connection paths can be established between subscriber terminals in all the existing subsidiary switching network groups.

11. Switching network as claimed in one of the claims 8 to 10, characterised in that each auxiliary subsidiary switching network (1HKa ... 16HKb) and each additional subsidiary switching network (ZK1a ... ZK4d) has two control units which are capable of substituting for one another.

O O16 396

1L11  1TG1  1ZA1A  1ZB1A

T1  1  64
T64
V1  1L12  1  32
V32
1L13  1  32
1L14  1  32
1D1  1E1
1S1
32  1HA1  1HB1
32
T1985  1TG32  1S32
1HA32  1HB32

1H1  1  32  1HKa
1H32  1  32
1H33  1  64
1  64
1H36  1  64
1  64
1Da  1Ea
1Sa

Z1a1  ZK1a
1  64
Z1a2  1  64
Z1a3  1  64
Z1a4  1  64
Z1az  E1a
16ZA1A  16ZB1A  S1a
1ZA1B

ZK1b S1b
ZK1c S1c
ZK1d S1d

1HKb 1Sb
1ZB1B

T30721  16TG1 16S1
16HA1
16HA32  16HB1
16TG32 16S32
XVI  16HB32

16HKa 16Sa
16ZA1B

16HKb 16Sb
16ZB1B

ZZ

ZK4a S4a
ZK4b S4b
ZK4c S4c
ZK4d S4d

1